# FASCICULE DE BREVET EUROPEEN

(11) **EP 2 878 774 B1**
(45) Date de publication et mention de la délivrance du brevet: **02.12.2015**
(21) Numéro de dépôt: 14190731.1
(22) Date de dépôt: 28.10.2014
(51) Int. Cl.: F01D 25/28, F02C 7/20, F02C 7/32

(54) **Turbomachine comportant des moyens de support d'au moins un équipement**
Triebwerk mit Hilfsmittel zur Halterung eines Geräts
Turbomachine comprising means for supporting auxiliary equipment

(30) Priorité: 08.11.2013 FR 1360932
(43) Date de publication de la demande: 03.06.2015
(73) Titulaire: SNECMA, 75015 Paris (FR)
(72) Inventeur: Ancuta, Carmen, 77550 Moissy-Cramayel (FR); Fert, Jérémy, Edmond, 77550 Moissy-Cramayel cedex (FR)
(74) Mandataire: Gevers France

(56) Documents cités:
- EP-A2- 2 607 658
- FR-A1- 2 925 016
- FR-A1- 2 963 320
- US-A- 5 452 575

## Description

### DOMAINE TECHNIQUE

La présente invention concerne une turbomachine comportant des moyens de support d'au moins un équipement.

### ETAT DE L'ART

Une turbomachine d'aéronef comprend d'amont en aval, dans le sens d'écoulement des gaz dans le moteur, une entrée d'air, au moins un compresseur, une chambre de combustion, au moins une turbine, et une tuyère d'éjection des gaz de combustion.

Un turboréacteur à double flux comprend notamment un corps basse pression comportant un premier arbre reliant un compresseur basse pression à une turbine basse pression, et un corps haute pression comportant un second arbre reliant un compresseur haute pression à une turbine haute pression. L'air pénétrant dans le moteur est comprimé successivement dans le compresseur basse pression et le compresseur haute pression avant d'être mélangé à du carburant qui est brûlé dans la chambre de combustion. Les gaz de combustion se détendent ensuite dans la turbine haute pression puis la turbine basse pression pour entraîner en rotation l'arbre basse pression qui entraîne à son tour un arbre de soufflante, la soufflante étant montée en amont des compresseurs et générant la majeure partie de la poussée du turboréacteur.

Les différents modules de la turbomachine sont entourés par des carters annulaires structuraux, c'est-à-dire des carters suffisamment rigides pour transmettre des efforts. Ainsi, une turbomachine peut comprendre d'amont en aval un carter de soufflante, un carter de compresseur basse pression, un carter intermédiaire qui s'étend entre les compresseurs basse et haute pression, des carters de compresseur haute pression, de chambre de combustion et de turbine haute pression, un carter inter-turbine qui s'étend entre les turbines haute pression et basse pression, un carter de turbine basse pression et un carter d'échappement au niveau de la tuyère de la turbomachine. Le document EP 2 607 658 A2 décrit une turbomachine selon la technique antérieure.

Dans la technique actuelle, il est connu d'augmenter le taux de dilution d'un turboréacteur à double flux, c'est-à-dire le rapport du débit du flux secondaire généré par la soufflante sur le débit du flux primaire alimentant le moteur. Ceci renforce l'effet de taille de guêpe de la turbomachine dont le moteur a un corps (en particulier au niveau du compresseur haute pression) qui a un diamètre relativement faible par rapport au carter de soufflante.

Plus une turbomachine a une taille de guêpe marquée, plus son corps risque de fléchir en fonctionnement. Pour remédier à ce problème, il est connu d'équiper une turbomachine de moyens de reprise des efforts de poussée du moteur, qui comprennent en général des bielles longitudinales dont une extrémité est articulée sur le carter intermédiaire et dont l'extrémité opposée est articulée sur des moyens de suspension de la turbomachine à un pylône d'aéronef.

Le rôle des bielles de reprise de poussée est de limiter les charges de poussée traversant les carters du moteur, ce qui permet d'éviter la flexion sous charges des carters sensibles, tels que ceux des compresseurs et turbines, où une bonne concentricité est indispensable en particulier pour minimiser les jeux en sommet d'aubes de rotor et assurer des performances satisfaisantes.

Par ailleurs, une turbomachine comprend de nombreux équipements. On a déjà proposé de monter des équipements au voisinage du corps du moteur. Cependant, ces équipements sont en général relativement encombrants et leur intégration est relativement complexe autour des carters du moteur, en particulier car il y a déjà de nombreux accessoires déjà installés dans cette zone. Les bielles précitées de reprise de poussée traversent cette zone et rendent difficile cette intégration car les équipements doivent être séparés des bielles par des jeux suffisants pour éviter tout contact entre eux.

En plus de la problématique de positionnement relatif des équipements dans une zone étriquée, se pose celle de leur support. En effet, le compresseur haute pression autour duquel s'installe la plupart des équipements (c'est la zone la moins chaude du corps du moteur), comprend plusieurs étages à calage variable contrôlées par un système VSV (*Variable Stator Vane*) dont l'encombrement ne permet pas de réaliser des bossages accessibles pour supporter des équipements. Les zones permettant de réaliser ces points de fixation se trouvent ainsi en amont et en aval de ces étages qui peuvent être plus ou moins nombreux en fonction de l'architecture concernée. Il est donc possible de se fixer sur le carter intermédiaire d'un coté ou bien sur la partie aval du carter du compresseur haute pression. Cependant, il devient difficile de trouver des points d'accrochage disponibles sachant qu'il y a également beaucoup de bossages pour des prélèvements d'air (les sorties VBV (*Variable Bleed Valve*) sur le carter intermédiaire et les nombreux prélèvements sur le compresseur haute pression pour le contrôle des jeux de turbine, le refroidissement des carters de turbine haute et basse pression, le conditionnement d'air cabine, etc.).

Il existe donc un réel besoin de moyens de support d'équipements dans cette zone du corps du moteur.

La présente invention apporte notamment une solution simple, efficace et économique à ce besoin.

### EXPOSE DE L'INVENTION

L'invention propose à cet effet une turbomachine, comportant des moyens de reprise des efforts de poussée, qui comprennent des bielles longitudinales dont les extrémités sont reliées à des carters annulaires structuraux de la turbomachine, caractérisée en ce qu'elle comprend des moyens de support d'au moins un équipement sur lesdites bielles de reprise de poussée et/ou de suspension d'au moins un équipement auxdites bielles de reprise de poussée.

L'invention permet ainsi de se servir des bielles de reprise de poussée d'une turbomachine pour supporter ou suspendre au moins un équipement et de l'intégrer dans le compartiment moteur. En outre, le fait de monter un équipement sur les bielles permet de l'éloigner du compresseur et par conséquent de le protéger plus efficacement du rayonnement thermique de celui-ci (du fait de la présence d'un volume d'air plus important entre le carter et l'équipement). Les bielles ont ainsi une double fonction de reprise de poussée et de support d'équipement(s). Il est envisageable d'augmenter le diamètre des bielles par rapport à celles de la technique antérieure pour qu'elles puissent assurer la fonction supplémentaire de support, par exemple en augmentant leur moment quadratique.

Les moyens de support et/ou de suspension peuvent comprendre des moyens de fixation sur les bielles, à distance de leurs extrémités. Ces moyens de fixation peuvent comprendre des colliers de serrage ou des liaisons boulonnées. Ce choix peut dépendre de la forme en section des bielles. En effet, les bielles peuvent être à section circulaire, carrée ou rectangulaire. Sur des bielles à section circulaire, il sera plus adapté de se fixer au moyen de colliers de fixation et sur celles à section non circulaire, une liaison boulonnée pourrait être envisageable.

Les moyens de support et/ou de suspension peuvent comprendre un support plan, tel qu'une plaque, s'étendant sensiblement entre les bielles et fixé à celles-ci. Avantageusement, le support plan et les bielles sont sensiblement coplanaires. Le support plan peut porter au moins deux équipements.

Les bielles de reprise de poussée peuvent forment un angle entre elles.

Les moyens de support et/ou de suspension de l'équipement peuvent comprendre des moyens d'amortissement de vibrations.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique d'une turbomachine d'aéronef selon la technique antérieure, vue de côté,
- la figure 2 est une vue schématique partielle et en perspective d'une turbomachine selon l'invention,
- la figure 3 est une vue à plus grande échelle des moyens de reprise de poussée et des moyens de support selon l'invention de la turbomachine de la figure 2.

### DESCRIPTION DETAILLEE

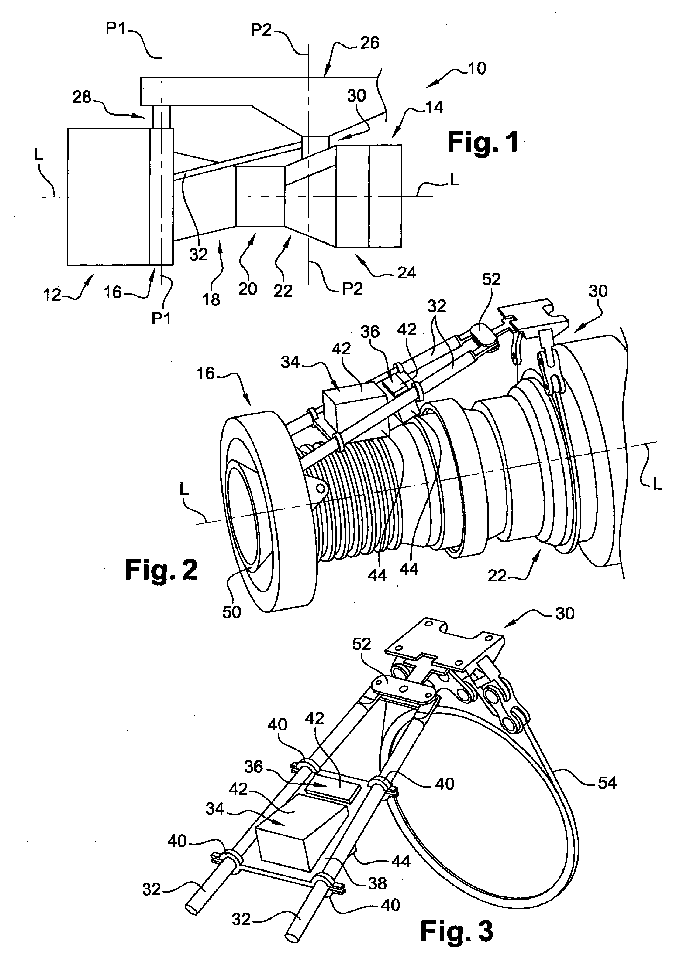

On se réfère d'abord à la figure 1 qui représente une turbomachine 10 selon la technique antérieure, cette turbomachine 10 étant ici un turboréacteur à double flux.

La turbomachine 10 comprend d'amont en aval, dans le sens d'écoulement des gaz, une soufflante 12 qui génère un flux qui se divise en deux flux coaxiaux, le flux primaire alimentant le moteur qui comprend un compresseur basse pression, un compresseur haute pression, une chambre de combustion, une turbine haute pression, une turbine basse pression et une tuyère 14 d'éjection des gaz de combustion.

Ces modules du moteur (soufflante, compresseurs, chambre de combustion, turbines) sont entourés par des carters annulaires structuraux. La turbomachine 10 comprend ainsi plusieurs carters annulaires successifs parmi lesquels un carter intermédiaire 16, un carter de compresseur haute pression 18, un carter de chambre de combustion 20, un carter inter-turbine 22 et un carter d'échappement 24.

Comme le montre la figure 1, pour assurer le montage et la fixation de la turbomachine 10 à un pylône 26 d'aéronef sous sa voilure, deux suspensions 28, 30, respectivement amont et aval, sont prévues, de manière à former une interface entre la turbomachine 10 et le pylône 26. La suspension amont 28 est disposée entre le pylône 26 et le carter intermédiaire 16 et la suspension aval est disposée entre le pylône 26 et le carter inter-turbine 22.

Les suspensions 28, 30 sont disposées et contenues dans deux plans de suspension P1 et P2 de la turbomachine, qui sont parallèles entre eux et orthogonaux à l'axe longitudinal L-L de celle-ci.

La turbomachine 10 de la figure 1 comprend en outre des moyens de reprise des efforts de poussée du moteur, qui comprennent ici deux bielles longitudinales 32 dont les extrémités amont sont articulées sur le carter intermédiaire 16 et dont les extrémités aval sont articulées sur la suspension aval 30.

Cependant, cette technologie présente des inconvénients parmi lesquels une intégration complexe des équipements dans la zone s'étendant autour du moteur qui est traversée par les bielles 32 de reprise de poussée.

L'invention permet de remédier à cet inconvénient en conférant une fonction de support d'équipement(s) aux bielles 32 de reprise de poussée.

Les figures 2 et 3 représentent un mode de réalisation de l'invention dans lequel les bielles 32 de reprise de poussée supportent deux équipements 34, 36. Ces équipement 34, 36 sont ici fixés sur une plaque de support 38 qui s'étend entre les bielles 32 et est fixée à celles-ci.

Dans l'exemple représenté, les bielles 32 ne sont pas parallèles mais forment un angle entre elles. La plaque de support 38 a une forme sensiblement trapézoïdale et occupe un espace inter-bielle, situé à distance des extrémités longitudinales des bielles. La plaque 38 peut être métallique et a par exemple une épaisseur comprise entre 1 et 5 millimètres.

La plaque 38 comprend au niveau de ses coins des moyens 40 de fixation sur les bielles 32, ces moyens de fixation comprenant ici des colliers de serrage qui enserrent les brides 32 et sont bloqués sur celles-ci par l'intermédiaire de boulons non représentés.

Les équipements 34, 36 peuvent être fixés ou montés sur la plaque 38 par tous moyens appropriés, et par exemple par l'intermédiaire de plots amortisseurs. Dans l'exemple représenté, les équipements 34, 36 sont alignés l'un derrière l'autre le long de l'axe longitudinal LL de la turbomachine, et comprennent chacun une partie supérieure 42 s'étendant au dessus de la plaque 38 (ou radialement à l'extérieur de la plaque par rapport à l'axe LL) et une partie inférieure 44 qui s'étend au dessous de la plaque 38 (ou radialement à l'intérieur de la plaque par rapport à l'axe LL).

La plaque 38 peut être métallique et a par exemple une épaisseur de quelques millimètres.

Dans l'exemple représenté, les bielles 32 sont montées en aval du carter intermédiaire 16 et leurs extrémités amont sont articulées sur celui-ci. Plus précisément, le carter intermédiaire 16 comprend un moyeu 50 entouré par une paroi cylindrique (non représentée) et relié à celle-ci par des bras radiaux. Les extrémités amont des bielles 32 sont articulées sur le moyeu 50 du carter intermédiaire 16.

Les extrémités aval des bielles 32 sont articulées sur les extrémités d'un palonnier 52 qui est lui-même articulé sur la suspension aval 30, comme décrit dans la demande de brevet FR 12/51813. La suspension aval 30 est ici reliée par des bielles à un anneau 54 monté autour du carter inter-turbine 22.

## Revendications

1. Turbomachine, comportant des moyens de reprise des efforts de poussée, qui comprennent des bielles longitudinales (32) dont les extrémités sont reliées à des carters annulaires (16, 22) structuraux de la turbomachine, **caractérisée en ce qu'**elle comprend des moyens (38) de support d'au moins un équipement (34, 36) sur lesdites bielles de reprise de poussée et/ou de suspension d'au moins un équipement auxdites bielles de reprise de poussée.

2. Turbomachine selon la revendication 1, **caractérisée en ce que** les moyens (38) de support et/ou de suspension comprennent des moyens (40) de fixation sur les bielles (32), à distance de leurs extrémités.

3. Turbomachine selon la revendication 2, **caractérisée en ce que** les moyens de fixation (40) comprennent des colliers de serrage ou des liaisons boulonnées.

4. Turbomachine selon l'une des revendications précédentes, **caractérisée en ce que** les moyens de support et/ou de suspension comprennent un support plan, tel qu'une plaque (38), s'étendant sensiblement entre les bielles (32) et fixé à celles-ci.

5. Turbomachine selon la revendication 4, **caractérisée en ce que** le support plan et les bielles (32) sont sensiblement coplanaires.

6. Turbomachine selon la revendication 4 ou 5, **caractérisée en ce que** le support plan porte au moins deux équipements (34, 36).

7. Turbomachine selon l'une des revendications précédentes, **caractérisée en ce que** les bielles (32) forment un angle entre elles.

8. Turbomachine selon l'une des revendications précédentes, **caractérisée en ce que** les bielles (32) sont à section circulaire, carrée ou rectangulaire.

9. Turbomachine selon l'une des revendications précédentes, **caractérisée en ce que** les moyens (38) de support et/ou de suspension comprennent des moyens d'amortissement de vibrations.

## Patentansprüche

1. Triebwerk, das Mittel zur Übernahme der Schubkräfte aufweist, die längliche Pleuelstangen (32) umfassen, deren Enden mit ringförmigen Strukturgehäusen (16, 22) des Triebwerks verbunden sind, **dadurch gekennzeichnet, dass** es Stützmittel (38) mindestens einer Ausrüstung (34, 36) auf den Schubübernahme- und/oder Aufhängungspleuelstangen mindestens einer Ausrüstung auf den Schubübernahmepleuelstangen umfasst.

2. Triebwerk nach Anspruch 1, **dadurch gekennzeichnet, dass** die Stütz- und/oder Aufhängungsmittel (38) Befestigungsmittel (40) auf den Pleuelstangen (32) beabstandet von ihren Enden umfassen.

3. Triebwerk nach Anspruch 2, **dadurch gekennzeichnet, dass** die Befestigungsmittel (40) Spannringe oder Schraubverbindungen umfassen.

4. Triebwerk nach einem der vorangehenden Ansprüche, **dadurch gekennzeichnet, dass** die Stütz- und/oder Aufhängungsmittel eine ebene Stütze wie eine Platte (38) umfassen, die sich etwa zwischen den Pleuelstangen (32) erstreckt und an diesen befestigt ist.

5. Triebwerk nach Anspruch 4, **dadurch gekennzeichnet, dass** die ebene Stütze und die Pleuelstangen (32) etwa koplanar sind.

6. Triebwerk nach Anspruch 4 oder 5, **dadurch gekennzeichnet, dass** die ebene Stütze mindestens zwei Ausrüstungen (34, 36) trägt.

7. Triebwerk nach einem der vorangehenden Ansprüche, **dadurch gekennzeichnet, dass** die Pleuelstangen (32) zwischen sich einen Winkel bilden.

8. Triebwerk nach einem der vorangehenden Ansprüche, **dadurch gekennzeichnet, dass** die Pleuelstangen (32) eine kreisförmigen, quadratischen oder rechteckigen Querschnitt haben.

9. Triebwerk nach einem der vorangehenden Ansprüche, **dadurch gekennzeichnet, dass** die Stütz- oder Aufhängungsmittel (38) Vibrationsdämpfungsmittel umfassen.

## Claims

1. Turbine engine, comprising means for absorbing thrust forces that comprise longitudinal connecting rods (32), the ends of which are connected to structural annular casings (16, 22) of the turbine engine, **characterised in that** it comprises means (38) for supporting at least one item of equipment (34, 36) on said thrust-absorbing connecting rods and/or for suspending at least one item of equipment from said thrust-absorbing connecting rods.

2. Turbine engine according to claim 1, **characterised in that** the support and/or suspension means (38) comprise means (40) for fixing on the connecting rods (32), at a distance from their ends.

3. Turbine engine according to claim 2, **characterised in that** the fixing means (40) comprise clamping collars or bolted connections.

4. Turbine engine according to any of the preceding claims, **characterised in that** the support and/or suspension means comprise a flat support, such as a plate (38), extending substantially between the connecting rods (32) and fixed thereto.

5. Turbine engine according to claim 4, **characterised in that** the flat support and the connecting rods (32) are substantially coplanar.

6. Turbine engine according to either claim 4 or claim 5, **characterised in that** the flat support carries at least two items of equipment (34, 36).

7. Turbine engine according to any of the preceding claims, **characterised in that** the connecting rods (32) form an angle between them.

8. Turbine engine according to any of the preceding claims, **characterised in that** the connecting rods (32) have a circular, square or rectangular cross section.

9. Turbine engine according to any of the preceding claims, **characterised in that** the support and/or suspension means (38) comprise vibration-damping means.
